# EUROPÄISCHE PATENTSCHRIFT

(11) **EP 1 752 041 B1**
(45) Veröffentlichungstag und Bekanntmachung des Hinweises auf die Patenterteilung: **02.01.2008**
(21) Anmeldenummer: 05017446.5
(22) Anmeldetag: 11.08.2005
(51) Int. Cl.: A01M 1/02, A01M 1/14

(54) **Vorrichtung zum Anlocken von Insekten**
Device for attracting insects
Dispositif pour attirer les insectes

(43) Veröffentlichungstag der Anmeldung: 14.02.2007
(73) Patentinhaber: IGu Trust, Christchurch (NZ)
(72) Erfinder: Engelbrecht, Bert, Christchurch (NZ); Engelbrecht, Jörg, Christchurch (NZ)
(74) Vertreter: Schickedanz, Willi

(56) Entgegenhaltungen:
- WO-A-00/59300
- WO-A-98/53677
- DE-A1- 3 840 440
- DE-A1- 10 259 651
- US-A- 2 742 342
- US-A- 4 283 878
- US-A- 5 943 815
- US-A1- 2003 070 345
- US-B1- 6 516 559

## Beschreibung

Die Erfindung betrifft eine Vorrichtung zum Anlocken von Insekten gemäβß dem Patentanspruch 1.

Fluginsekten können sich für Mensch und Tier als wahre Quälgeister erweisen, die es abzuwehren gilt.

Neben der gemeinen Stubenfliege ist die Schmeißfliege zu erwähnen, die der Mensch nicht nur als störend empfindet, sondern die auch als Überträger von Krankheitserregern bekannt ist. Deshalb möchte der Mensch diese Fliegen aus den Bereichen fernhalten, in denen sich Lebensmittel befinden, da Fliegen in diese Eier legen, aus denen Maden schlüpfen und aus denen sich schließlich wieder Fliegen entwickeln.

Um sich vor diesen Fluginsekten zu schützen, wurden bereits Fliegenfänger entwickelt, die insbesondere dann sehr effektiv sind, wenn sie ultraviolettes Licht ausstrahlen (DE 38 40 440 C2, WO 98/53677) oder Lockstoffe abgeben (US- 5 635 174 A, US 5 770 189 A, EP 0 768 823 B1, US 5 683 687). Da die Fliegen von dem ultravioletten Licht sowie von den Lockstoffen angezogen werden, fliegen sie in Richtung des Fliegenfängers, wo sie von einem dort angebrachten Klebestreifen festgehalten werden.

Aber auch Stechmücken sind bei Mensch und Tier unbeliebt, zumal diese Krankheiten übertragen, die häufig auch tödlich enden können. Leider fühlen sich diese Stechmücken so gut wie nicht von ultraviolettem Licht angezogen (N. O. Morgan und E. C. Uebel: Efficacy of the Assateague Insect Trap in Collecting Mosquitos and Biting Flies in Maryland Salt Marsh, Mosquito News 34, 1974, S. 196 - 199). Auch sind andere Lockstoffe als bei Fliegen erforderlich, um Stechmücken anzulocken. Mit den konventionellen Fliegenfängern können sie nur schlecht gefangen werden.

Es ist jedoch bekannt, dass CO₂ ein wirksamer Lockstoff für Stechmücken ist, da es ihnen die Anwesenheit von Warmblütern anzeigt. Damit ist es möglich, die Stechmücken mittels Trockeneis (festes CO₂) anzulocken, da Trockeneis oberhalb von -78,5 °C sublimiert. So wurde vorgeschlagen, eine Standardlichtquelle mit einer CO₂-Quelle zu kombinieren, um Stechmücken anzulocken (R. R. Carestia und Linnaeus B. Savage, Effectiveness of Carbon Dioxide as a Mosquito Attractant in the CDC Miniature Light Trap, Mosquito News, Vol. 27, 1967, S. 90 - 92).

Ein weiterer Lockstoff für Stechmücken ist Milchsäure, von der es drei Typen gibt. So wurde herausgefunden, dass die rechtsdrehende Milchsäure, die L-(+)Milchsäure, ein Abbauprodukt des menschlichen Körpers, Stechmücken anlockt (F. Acree, Jr., R. B. Turner, H. K. Gouck, M. Beroza: L-Lactid Acid: A Mosquito Attractant Isolated from Humans, Science, Vol. 161, 1968, S. 1346 - 1347).

Aber auch Vitamin B oder Cholesterin wurde die Fähigkeit zugesprochen, Stechmücken anzulocken (SPIEGEL ONLINE 34/1999).

Es hat sich ferner herausgestellt, dass substituierte Benzol-Derivate, wie sie auch in den Sekreten fleischfressender Pflanzen vorkommen, nicht nur Fliegen und Wespen, sondern auch Stechmücken anlocken (WO 97/03561).

Ein Fanggerät für Fluginsekten, mit dem sowohl Fliegen als auch Stechmücken gefangen werden können, macht sich diese wissenschaftlichen Erkenntnisse zunutze (EP 1 213 958 B1). Dieses Fanggerät besitzt wie die konventionellen Fliegenfänger eine ultraviolette Lichtquelle (UV-Lichtquelle) mit einem Klebestreifen, wobei zusätzlich noch ein offener Behälter für die Aufnahme einer Substanz vorgesehen ist, die die Stechmücken anlockt. Fliegen sowie Stechmücken werden durch den Klebestreifen gefangen, sobald sie dort auftreffen.

Des Weiteren ist eine Vorrichtung zum Anlocken von Stechmücken und beißenden Insekten bekannt, die einen Mechanismus zum Verbrennen von Treibstoff aufweist, der in einer Verbrennungseinheit angeordnet ist (US 2003/0070345 A1). In der Nähe der Verbrennungseinheit ist eine Vorrichtung zum Verdampfen eines Lockstoffes angebracht, die eine äußere Fläche und eine Struktur zur Abgabe von Wärme besitzt. Dabei sind die äußere Fläche und die Struktur zur Abgabe von Wärme derart angeordnet, dass die äußere Fläche einen- im Wesentlichen konstanten Temperaturbereich beibehält, wenn der Treibstoff durch den Mechanismus verbrannt wird.

Der Erfindung liegt die Aufgabe zugrunde, eine Stechmücken-Fangvorrichtung bereitzustellen, die eine hohe Fangrate aufweist.

Diese Aufgabe wird gemäß den Merkmalen des Patentanspruchs 1 gelöst.

Die Erfindung betrifft somit eine Vorrichtung zum Anlocken von Insekten, wobei eine Aufnahme für einen Dispenser vorgesehen ist, der wenigstens einen Lockstoff abgeben kann. Diese Aufnahme ist an einem geschlossenen Hohlkörper angeordnet, der an einer Stelle offen ist. Mit der offenen Stelle kann er über eine Wärmequelle gestülpt werden, die zugleich als Halterung für den Hohlkörper dient. Mit Hilfe der Aufnahme für den Dispenser kann eine an sich bekannte Vorrichtung zum Fangen von Fliegen in eine Vorrichtung zum Fangen von Mücken umgewandelt werden.

Der mit der Erfindung erzielte Vorteil besteht insbesondere darin, dass ein Gerät zum Fangen von Fliegen nur durch einen zusätzlichen Aufsatz zu einem Gerät zum Fangen von Stechmücken umgebaut werden kann.

Der Aufsatz besitzt eine Aufnahme, in die ein Dispenser eingesetzt werden kann. Dieser Dispenser besitzt vorzugsweise Lockstoffe für Stechmücken, kann aber auch Lockstoffe für andere Insekten aufweisen. Dadurch dass der Dispenser in der Nähe einer UV-Lampe angebracht ist, verdampfen die Lockstoffe durch die von der Lampe erzeugte Wärme kontinuierlich. Dabei wird allerdings der größte Anteil der Wärme nicht von der UV-Lampe selbst, sondern von einem Vorschaltgerät erzeugt. Unter einem Vorschaltgerät versteht man ein strombegrenzendes Gerät für Gasentladungslampen. Bei dem Vorschaltgerät kann es sich um eine Vorschaltdrosselspule handeln. Es kann aber auch ein elektronisches Vorschaltgerät zum Einsatz kommen.

Der Austausch des Dispensers ist bei der Erfindung sehr einfach. Eine Vielzahl von an der erfindungsgemäßen Vorrichtung angebrachten Klebestreifen erhöht die Fangrate nicht nur für die angelockten Stechmücken, sondern auch für Fliegen.

Ausführungsbeispiele der Erfindung sind in den Zeichnungen dargestellt und werden nachfolgend näher erläutert. Es zeigen:
Fig. 1 eine perspektivische Ansicht eines Gestells einer an sich bekannten Fliegen-Fangvorrichtung;
Fig. 2 eine perspektivische Ansicht einer Stechmücken-Fangvorrichtung, die mit einer Fliegen-Fangvorrichtung gekoppelt werden kann;
Fig. 3 eine perspektivische Ansicht einer Insekten-Fangvorrichtung in ihrer Funktion als Stechmücken-Fangvorrichtung;
Fig. 4 eine Draufsicht auf die Insekten-Fangvorrichtung gemäß Fig. 3 ohne Deckel.

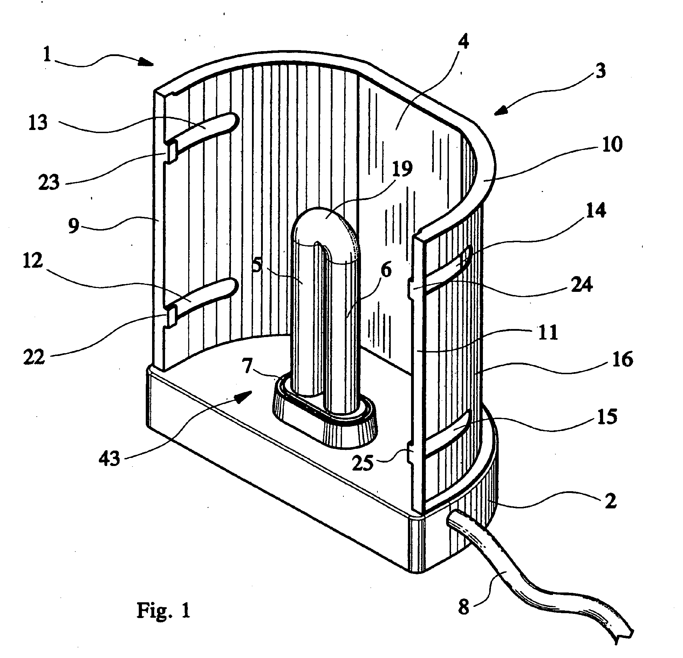

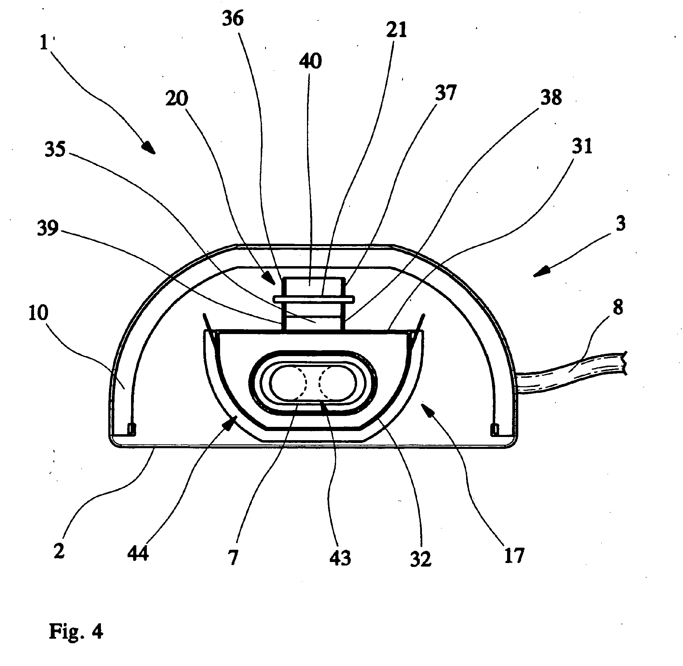

In Fig. 1 ist eine perspektivische Ansicht eines Gestells 3 einer bekannten Insekten-Fangvorrichtung 1 dargestellt (vgl. Fig. 1 und Fig. 4 in EP 1 213 958 B1). Das Gestell 3 weist einen Rahmen 9, 10, 11 auf, der auf einem Sockel 2 angeordnet ist. Das Gestell 3 bildet so eine halb ovale Anordnung. Rahmen 9, 10, 11 und Sockel 2 umgeben eine Wand 16 mit einer Innenseite 4, die drei Bereiche aufweist: zwei gekrümmte Bereiche und einen ebenen Bereich. Die Innenseite 4 der Wand 16 dient zur Aufnahme einer Klebefolie, die sich an die Innenseite anschmiegt und die durch Vorsprünge 22 bis 25 gehalten wird. Die Wand 16 weist zudem Aussparungen 12 bis 15 auf, mit deren Hilfe durch Drücken auf die in Fig. 1 nicht dargestellten Klebefolie diese leicht wieder entfernt werden kann.

Auf dem Sockel 2 befindet sich eine UV-Lichtquelle 43. Sie besteht aus zwei parallel zueinander verlaufenden Röhrenabschnitten 5, 6, wobei die Röhrenabschnitte 5, 6 auf einem Lampensockel 7 sitzen. Beide Röhrenabschnitte 5, 6 sind über ein Verbindungsstück 19 miteinander verbunden.

Die UV-Lichtquelle 43 wird von drei Seiten von dem Rahmen 9, 10, 11 sowie der Innenseite 4 der Wand 16 umgeben. Ferner ist am Sockel 2 ein Kabel 8 angebracht, über welches die UV-Lichtquelle 43 mit Strom versorgt wird. Es ist auch eine mit Batterien betriebene UV-Lichtquelle 43 denkbar. Vorzugsweise befindet sich jedoch in dem Sockel 2 ein nicht dargestelltes Vorschaltgerät, das Wärme erzeugt.

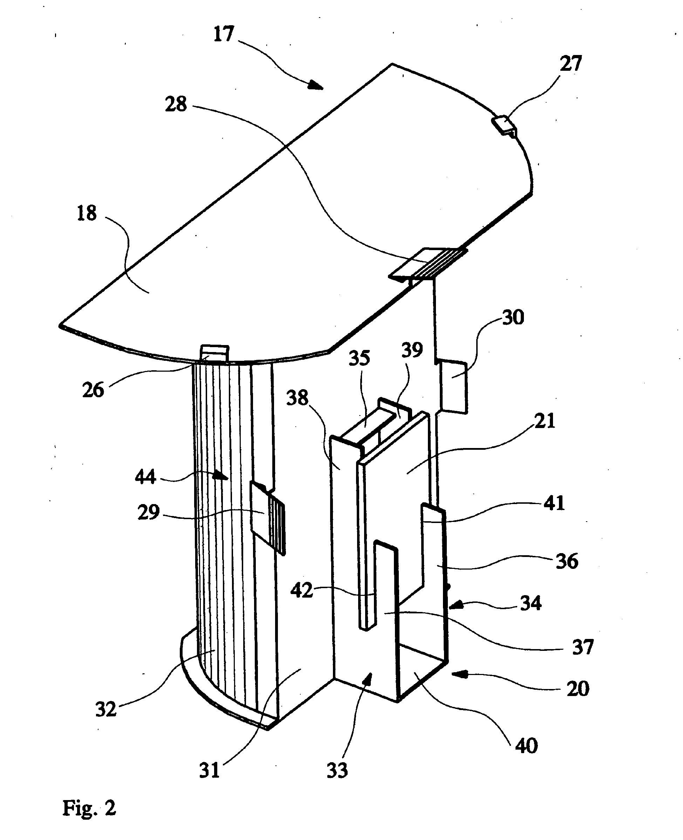

Fig. 2 zeigt eine Mücken-Fangvorrichtung 17, die in die Insekten-Fangvorrichtung 1 gemäß Fig. 1 eingebracht werden kann. Diese Mücken-Fangvorrichtung 17 besteht im Wesentlichen aus einem geschlossenen Hohlkörper 44 mit einem darauf sitzenden Deckel 18 sowie einer an dem Hohlkörper 44 angebrachten Aufnahmevorrichtung 20 für einen Dispenser 21. Diese Aufnahmevorrichtung 20 ist an einer Wand 31 angeordnet, die, wenn die Mücken-Fangvorrichtung 17 in die in Fig. 1 dargestellte Insekten-Fangvorrichtung 1 eingebaut wird, die Rückwand 31 bildet. Die Aufnahmevorrichtung 20 für den Dispenser 21 besitzt zwei seitliche Wände 33, 34, die mit der Rückwand 31 in Verbindung stehen.

Jede dieser Wände 33, 34 besitzt eine Aussparung 41, 42, die durch Stege 36 bis 39 gebildet ist. Die Aussparungen 41, 42 sind im Wesentlichen parallel zueinander angeordnet, sodass in diese der Dispenser 21 eingelegt und gehalten werden kann. Beide Wände 33, 34 stehen über einen Boden 40 sowie einen Steg 35 miteinander in Verbindung. Durch den Steg 35 wird die Aufnahmevorrichtung 20 für den Dispenser 21 zusätzlich stabilisiert.

Wenn die Mücken-Fangvorrichtung 17 in das Gestell 3 der Insekten-Fangvorrichtung 1 eingebracht ist, befindet sich die Aufnahmevorrichtung 20 unmittelbar vor der Innenseite 4 der Insekten-Fangvorrichtung 1. Der Deckel 18 weist eine Halterung 28 sowie Klemmvorrichtungen 26, 27 auf, mit denen eine auf dem Deckel 18 angebrachte Klebefolie gehalten werden kann.

Der Hohlkörper 44 der Mücken-Fangvorrichtung 17 besitzt zwei im Wesentlichen als Halbkreis ausgebildete Seitenwände sowie eine Frontwand, von denen in der Fig. 2 nur die Seitenwand 32 sichtbar ist. An den Seitenwänden und an der Frontwand kann eine weitere Klebefolie angebracht werden, die über Halterungen 29, 30 befestigt wird. Die Klebefolie umgibt somit den Hohlkörper 44 fast vollständig.

Der Dispenser 21 besteht aus einem im Wesentlichen gasdurchlässigen Material mit einer Mindestporengröße. Er weist mindestens einen Lockstoff auf, auf den insbesondere Stechmücken ansprechen. In dem Dispenser 21 können sich jedoch auch mehrere Lockstoffe befinden, die eine große Bandbreite an Fluginsekten anziehen. Der Dispenser 21 ist leicht durch einen neuen auszutauschen, sobald er seine Wirkung verliert.

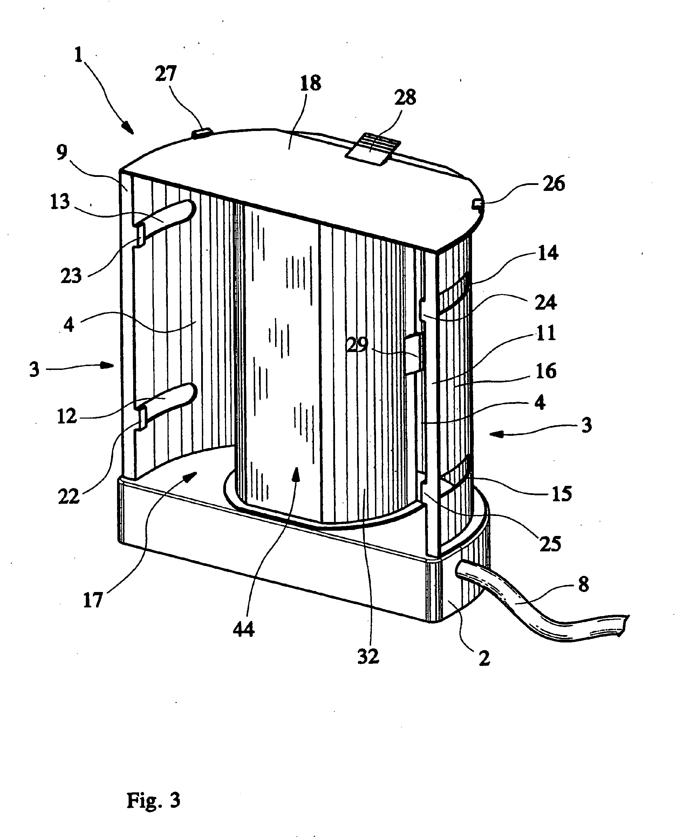

Fig. 3 zeigt eine perspektivische Ansicht der Insekten-Fangvorrichtung 1 mit Gestell 3 und der eingebauten Mücken-Fangvorrichtung 17. Das Gestell 3 sowie die abnehmbare Mücken-Fangvorrichtung 17 befinden sich auf dem Sockel 2. Dabei umgibt die Mücken-Fangvorrichtung 17 die UV-Strahlungsquelle 5, 6, 19 vollständig.

An den Rahmen 9, 10, 11 schließt sich die Wand 16 an, die einen wesentlichen Teil des Gestells 3 bildet. Der Rahmen 10 ist jedoch hier nicht zu sehen, da auf ihm der Deckel 18 liegt. Sockel 2, Rahmen 9 bis 11 und Deckel 18 sind im Wesentlichen halboval ausgebildet. Der Deckel 18 kann deshalb mit dem Rahmen 9, 10, 11 direkt abschließen; er kann aber auch, wie hier dargestellt, eine etwas andere Form haben, sodass er nur teilweise auf dem Rahmen 10 aufliegt.

Zu erkennen sind hier drei Möglichkeiten, Klebefolien anzubringen. Zum einen kann eine Klebefolie an die Innenseite 4 der Wand 16 angebracht werden, wobei sie durch die Vorsprünge 22 bis 25 gehalten wird. Diese Klebefolie dient in erster Linie zum Fangen von Fliegen und ist weiß, d. h. sie reflektiert Licht. Wird die Insekten-Fangvorrichtung als Stechmücken-Fangvorrichtung verwendet, ist die Klebefolie jedoch schwarz. Ferner kann eine schwarze Klebefolie auf dem Deckel 18 sowie auf der Hohlkörper 44 der Mücken-Fangvorrichtung 17 jeweils über dort angebrachte Halterungen 28, 29, 30 vorzugsweise Klammern, befestigt werden, wobei nur die Halterungen 28, 29 zu erkennen sind.

Auf dem Deckel 18 sind zusätzlich zu der Halterung 28 noch Vorsprünge 26, 27 angebracht, die als Führungsanschläge für eine Folie dienen.

Die Insekten-Fangvorrichtung kann aus einem beliebigen Material zusammengesetzt sein. Vorzugsweise besteht sie jedoch aus Kunststoff.

Fig. 4 zeigt eine Draufsicht auf die Insekten-Fangvorrichtung 1 ohne den Deckel 18 der Mücken-Fangvorrichtung 17.

Zu sehen ist die Mücken-Fangvorrichtung 17, wie sie den Sockel 7 mit der UV-Lichtquelle 43 vollständig umgibt. An der Rückwand 31 der Mücken-Fangvorrichtung 17 ist die Aufnahmevorrichtung 20 mit dem daran angebrachten Dispenser 21 zu erkennen. Der Dispenser 21 besitzt eine solche Nähe zur Mücken-Fangvorrichtung 17, dass die von der UV-Lichtquelle 43 sowie von dem im Sockel 2 angeordneten Vorschaltgerät abgegebene Wärme ausreicht, die in dem Dispenser 21 befindlichen Stoffe in den gasförmigen Zustand zu überführen. Dabei wird kontinuierlich eine solche Menge in den gasförmigen Zustand überführt, die groß genug ist, dass die Mücken diese freigesetzten Stoffe wahrnehmen.

Im Folgenden wird auf den Betrieb sowie die Wirkungsweise der Insekten-Fangvorrichtung 1 eingegangen.

Bei einer ersten Betriebsweise "Fliegen-Fangen" wird bei der Insekten-Fangvorrichtung 1 gemäß Fig. 1 eine Licht reflektierende Klebefolie in den Rahmen 9, 10, 11 eingebracht, und zwar auf der Innenseite 4. Jetzt wird die UV-Lichtquelle 5, 6, 19 eingeschaltet, sodass Fliegen durch das UV-Licht angezogen werden und an der Klebefolie hängen bleiben.

Bei einer zweiten Betriebsweise "Stechmücken-Fangen" wird die Mücken-Fangvorrichtung 17 gemäß Fig. 2 - die auf ihrer Außenseite komplett schwarz ist - mit dem Dispenser 21 bestückt, wobei der Dispenser 21 in die Aufnahmevorrichtung 20 eingesetzt wird. Jetzt wird die Mücken-Fangvorrichtung 17, deren Hohlkörper 44 auf der Unterseite offen ist, über die UV-Lichtquelle 5, 6, 19 gemäß Fig. 1 gestülpt, sodass die UV-Lichtquelle 5, 6, 19 vollständig eingeschlossen ist und nur noch als Wärmequelle, nicht mehr jedoch als Lichtquelle fungiert. Zudem ist im Sockel 2 ein Vorschaltgerät eingebaut, welches Wärme erzeugt. Die von der Lichtquelle und dem Vorschaltgerät abgegebene Wärme reicht aus, dass der Stoff in dem Dispenser 21 langsam und kontinuierlich in den gasförmigen Zustand übergeht, wodurch Stechmücken angezogen werden.

Die so angezogenen Stechmücken fliegen auf die Insekten-Fangvorrichtung 1 zu und werden, sobald sie mit einer Klebefolie in Berührung kommen, festgehalten.

Die Mücken-Fangvorrichtung 17 gemäß Fig. 2 kann gewissermaßen als Zubehör zur Insekten-Fangvorrichtung 1 gemäß Fig. 1 angesehen werden. Die Insekten-Fangvorrichtung 1 dient somit zum einen als Fliegen-Fangvorrichtung und zum anderen als Mücken-Fangvorrichtung.

Sie kann jedoch auch gleichzeitig als Mücken- und Fliegen-Fangvorrichtung arbeiten. Dies kann dadurch geschehen, dass der Dispenser einen Stoff enthält, der sowohl Mücken als auch Fliegen anzieht.

## Patentansprüche

1. Stechmücken-Fangvorrichtung (17) für eine Fliegen-Fangvorrichtung (1), wobei die Fliegen-Fangvorrichtung (1)
1.1 einen Sockel (2), eine Wärmequelle (5, 6, 7, 19) und eine Wand (16) auf dem Sockel aufweist, wobei
1.1.1 die Wand (16) hinter und neben der Wärmequelle (5, 6, 7, 19) angeordnet ist und
1.2 die Stechmücken-Fangvorrichtung (17) einen geschlossenen Hohlkörper (44) aufweist,
1.2.1 der an einer Stelle mit einer Öffnung versehen ist und der
1.2.2 auf seiner Außenseite eine Aufnahme (20) für einen Dispenser (21) aufweist sowie
1.2.3 gegenüber der Öffnung auf der Oberseite mit einem Deckel (18) abgeschlossen ist, dessen Konturen den Konturen des Sockels (2) entsprechen.

2. Stechmücken-Fangvorrichtung nach Anspruch 1, **dadurch gekennzeichnet, dass** die Öffnung des Hohlkörpers (44) auf der Unterseite ist.

3. Stechmücken-Fangvorrichtung nach Anspruch 1, **dadurch gekennzeichnet, dass** die Fläche des Deckels (18) wenigstens gleich groß ist wie die Querschnittsfläche des Hohlkörpers (44).

4. Stechmücken-Fangvorrichtung nach Anspruch 1, **dadurch gekennzeichnet, dass** der Hohlkörper (44) auf wenigstens einem Bereich seiner Außenseite mit einer klebrigen Substanz versehen ist.

5. Stechmücken-Fangvorrichtung nach Anspruch 1, **dadurch gekennzeichnet, dass** auf dem Umfang des Hohlkörpers (44) Klammerelemente (27, 28, 29, 30) für die Halterung von klebrigen Folien vorgesehen sind.

6. Stechmücken-Fangvorrichtung nach Anspruch 1, **dadurch gekennzeichnet, dass** die Aufnahme (20) von der Seite gesehen die Form eines U hat, wobei der eine Schenkel (36, 37) des U gegenüber dem anderen Schenkel (38, 39) verkürzt ist.

7. Stechmücken-Fangvorrichtung nach Anspruch 6, **dadurch gekennzeichnet, dass** zwei U-Teile (33, 38; 34, 36) parallel zueinander angeordnet und über Stege (35, 40) miteinander verbunden sind.

8. Stechmücken-Fangvorrichtung nach Anspruch 1, **dadurch gekennzeichnet, dass** der Hohlkörper (44) auf seine Außenseite schwarz ist.

9. Stechmücken-Fangvorrichtung nach Anspruch 1, **dadurch gekennzeichnet, dass** die Wärmequelle (5, 6, 19) als **Hohlkörperträger dient.**

10. Vorrichtung nach Anspruch **1, dadurch gekennzeichnet, dass** die Wärmequelle eine UV-Lichtquelle (43) enthält

11. Vorrichtung nach Anspruch 1, **dadurch gekennzeichnet, dass** eine zusätzliche Wärmequelle im Sockel (2) angeordnet ist.

12. Vorrichtung nach Anspruch 11, **dadurch gekennzeichnet, dass** die zusätzliche Wärmequelle im Sockel (2) ein Vorschaltgerät ist.

13. Vorrichtung nach den Ansprüchen 1 und 10, **dadurch gekennzeichnet, dass** die UV-Lichtquelle (43) als Träger für den Hohlkörper (44) dient.

## Claims

1. A mosquito capturing device (17) for a fly capturing device (1), with the fly capturing device (1) comprising:
1.1 a base (2), a heat source (5, 6, 7, 19), and a wall (16) on the base, with
1.1.1 the wall (16) being arranged behind and beside the heat source (5, 6, 7, 19), and
1.2 the mosquito capturing device (17) comprising a closed hollow body (44)
1.2.1 having an opening at one place and
1.2.2 having a receptacle (20) for a dispenser (21) on its exterior side and
1.2.3 being closed with a lid (18) on the upper side, opposite to the opening, the contours of which corresponding to the contours of the base (2).

2. A mosquito capturing device according to claim 1, **characterized by** the opening of the hollow body (44) being on the bottom side.

3. A mosquito capturing device according to claim 1, **characterized by** the area of the lid (18) being at least of the same size as the cross-sectional area of the hollow body (44).

4. A mosquito capturing device according to claim 1, **characterized by** the hollow body (44) being provided with an adhesive substance on at least one region of its exterior side.

5. A mosquito capturing device according to claim 1, **characterized by** clamping devices (27, 28, 29, 30) for holding adhesive foils being provided on the perimeter of the hollow body (44).

6. A mosquito capturing device according to claim 1, **characterized by** the receptacle (20) having a U-form, if viewed from the side, wherein one leg (36, 37) of the U is shortened compared to the other leg (38, 39).

7. A mosquito capturing device according to claim 1, **characterized by** two U-parts (33, 38; 34, 36) being arranged parallel to each other, and being connected with each other by bridges (35, 40).

8. A mosquito capturing device according to claim 1, **characterized by** the hollow body (44) being black on its exterior side.

9. A mosquito capturing device according to claim 1, **characterized by** the heat source (5, 6, 19) serving as a hollow body support.

10. A device according to claim 1, **characterized by** the heat source containing a UV light source (43).

11. A device according to claim 1, **characterized by** an additional heat source being arranged in the base (2).

12. A device according to claim 11, **characterized by** the additional heat source in the base (2) being a series connection unit.

13. A device according to claims 1 and 10, **characterized by** the UV light source (43) serving as a support for the hollow body (44).

## Revendications

1. Piège à moustiques (17) pour un piège à mouches (1), le piège à mouches (1) comportant
1.1 un socle (2), une source de chaleur (5, 6, 7, 19) et une paroi (16) sur le socle,
1.1.1 la paroi (16) étant disposée derrière et à côté de la source de chaleur (5, 6, 7, 19) et
1.2 le piège à moustiques (17) comportant un corps creux (44) fermé,
1.2.1 qui en un endroit est muni d'une ouverture et qui
1.2.2 sur une face extérieure comporte un logement (20) pour un distributeur (21) ainsi que,
1.2.3 en face de l'ouverture, sur la face supérieure est fermé par un couvercle (18) dont les contours correspondent aux contours du socle (2).

2. Piège à moustiques selon la revendication 1, **caractérisé en ce que** l'ouverture du corps creux (44) se trouve sur la face inférieure.

3. Piège à moustiques selon la revendication 1, **caractérisé en ce que** la surface du couvercle (18) a au moins la même dimension que la surface de section transversale du corps creux (44).

4. Piège à moustiques selon la revendication 1, **caractérisé en ce que** le corps creux (44) est muni sur au moins une région de sa face extérieure d'une substance gluante.

5. Piège à moustiques selon la revendication 1, **caractérisé en ce que** sur la périphérie du corps creux (44) sont prévus des éléments à crampons (27, 28, 29, 30), pour la fixation de films gluants.

6. Piège à moustiques selon la revendication 1, **caractérisé en ce que**, vu par le côté, le logement (20) a la forme d'un U, l'une des branches (36, 37) du U étant raccourcie par rapport à l'autre branche (38, 39).

7. Piège à moustiques selon la revendication 6, **caractérisé en ce que** deux éléments en U (33, 38; 34, 36) sont disposés à la parallèle l'un de l'autre et reliés entre eux par l'intermédiaire de barrettes (35, 40).

8. Piège à moustiques selon la revendication 1, **caractérisé en ce que** le corps creux (44) est noir sur sa face extérieure.

9. Piège à moustiques selon la revendication 1, **caractérisé en ce que** la source de chaleur (5, 6, 19) sert de support de corps creux.

10. Dispositif selon la revendication 1, **caractérisé en ce que** la source de chaleur contient une source de lumière UV (43).

11. Dispositif selon la revendication 1, **caractérisé en ce qu'**une source de chaleur supplémentaire est disposée dans le socle (2).

12. Dispositif selon la revendication 11, **caractérisé en ce que** la source de chaleur supplémentaire dans le socle (2) est un stabilisateur.

13. Dispositif selon les revendications 1 et 10, **caractérisé en ce que** la source de lumière UV (43) sert de support pour le corps creux (44).
